# EUROPÄISCHE PATENTSCHRIFT

(11) **EP 0 967 885 B1**
(45) Veröffentlichungstag und Bekanntmachung des Hinweises auf die Patenterteilung: **20.03.2002**
(21) Anmeldenummer: 98906899.4
(22) Anmeldetag: 31.01.1998
(51) Int. Cl.: A23K 1/00, A23K 1/16

(54) **VERFAHREN ZUR HERSTELLUNG EINES RIESELFÄHIGEN TIERFUTTERMITTELSUPPLEMENTS AUF METHIONINSALZBASIS UND DAS SO ERHÄLTLICHE GRANULAT**
METHOD FOR PRODUCING POURABLE METHIONINE SALT BASED ANIMAL FOOD SUPPLEMENT AND THE GRANULATE THUS OBTAINED
PROCEDE DE PRODUCTION DE COMPLEMENT ALIMENTAIRE COULANT POUR ANIMAUX, A BASE DE SEL DE METHIONINE ET GRANULAT OBTENU A L'AIDE DUDIT PROCEDE

(30) Priorität: 25.02.1997 DE 19707380
(43) Veröffentlichungstag der Anmeldung: 05.01.2000
(73) Patentinhaber: Degussa AG, 40474 Düsseldorf (DE)
(72) Erfinder: BINDER, Wolfram, D-63517 Rodenbach (DE); HASSEBERG, Hans, Albrecht, D-63584 Gründau (DE); KNIESEL, Heidemarie, D-63768 Hösbach (DE); KÖRFER, Martin, D-63867 Johannisberg (DE)
(86) Internationale Anmeldenummer: EP9800515
(87) Internationale Veröffentlichungsnummer: WO9837772

(56) Entgegenhaltungen:
- EP-A- 0 556 498
- EP-A- 0 809 940
- DATABASE WPI Section Ch, Week 8115 Derwent Publications Ltd., London, GB; Class C04, AN 81-26106D XP002069060 -& JP 56 015 834 A (SUMITOMO CHEM CO LTD) -& PATENT ABSTRACTS OF JAPAN vol. 5, no. 62 (C-052), 25.April 1981 & JP 56 015834 A (SUMITOMO CHEM CO LTD), 16.Februar 1981,
- DATABASE WPI Section Ch, Week 9241 Derwent Publications Ltd., London, GB; Class B05, AN 92-337741 XP002069061 -& JP 04 244 056 A (SUMITOMO CHEM CO LTD)
- DATABASE WPI Section Ch, Week 8809 Derwent Publications Ltd., London, GB; Class C03, AN 88-058362 XP002069062 -& ES 8 800 009 A (NOREL SA)

## Beschreibung

Die Erfindung betrifft ein Verfahren zur Herstellung eines rieselfähigen, gut handhabbaren Tierfuttermittelsupplements auf Methioninsalzbasis, bei dem ausgehend von einer auf herkömmliche Weise erhältlichen Methioninsalzlösung ein granuliertes Produkt erzeugt wird, sowie die so erhältlichen Methioninatgranulatprodukte.

Methionin sowie wäßrige Lösungen von Methioninsalzen, insbesondere von Natriummethioninat (DE 31 05 009 C), aber auch Ersatzstoffe wie das Methionin-Hydroxyanaloge (MHA) werden weltweit als Futtermittelzusatz für die Aufzucht von Geflügel, Schweinen und anderen Nutztieren verwendet und kommen hauptsächlich der Produktion von tierischem Eiweiß zugute. Gerade im Hinblick auf die steigende Weltbevölkerung und die zunehmenden Ernährungsprobleme kommt dem Methionin als einer der erstlimitierenden Aminosäuren im tierischen Wachstumsprozeß und seinen verschiedenen Formen und damit auch deren kostengünstiger Herstellung eine besondere Bedeutung zu. Je nach Erfordernissen werden Feststoff oder Flüssigformen bevorzugt eingesetzt.

Die im Handel befindliche Natriummethioninat-Lösung hat eine Konzentration von 40 Gew.-% Methionin und entspricht im Gegensatz zum Ersatzstoff MHA hinsichtlich ihrer biologischen Wertigkeit dem festen Methionin, verglichen auf äquimolarer Basis. Für die Herstellung solcher Natriummethioninat-Lösungen kommen mehrere Methoden in Betracht, z. B:
1. Auflösen von isoliertem Methionin in Natronlauge.
2. Alkalische Hydrolyse von 5-(β-Methylmercaptoethyl)hydantoin mit NaOH und/oder Na₂CO₃.
3. Alkalische Hydrolyse von Methioninamid.

Verfahren 1 liefert zwar die reinste Produktform, ist aber durch einen zusätzlichen Arbeitsschritt im Vergleich zur Feststoffproduktion aufwendiger und damit weniger wirtschaftlich als die Herstellung von Methionin selbst. Dagegen setzen die Verfahren 2 bzw. 3 zu einem früheren Zeitpunkt der Methioninherstellung ein und erreichen damit eine kapazitätsmäßige Entlastung des Feststoffteils der DL-Methionin-Herstellung.

Die Herstellung von 5-(β-Methylmercaptoethyl)-hydantoin erfolgt in bekannnter Weise durch Direktsynthese aus den üblichen Ausgangsstoffen Methylmercaptopropionaldehyd (MMP) und Blausäure in Gegenwart von Ammoniak und Kohlendioxid. Methioninamid stellt man in bekannter Weise durch Hydrolyse von Methioninnitril her, welches wiederum durch Direktsynthese aus den üblichen Ausgangsstoffen MMP, Blausäure oder Ammoniumcyanid und Ammoniak gewonnen wird.

In Abhängigkeit von speziellen Erfordernissen kann es zweckmäßig sein, eine feste oder flüssige Form des Tierfuttermittelsupplements einzusetzen.

Die Entscheidung für die Darreichungsform ist u. a. abhängig von den zur Verfügung stehenden Mischwerkzeugen bzw. den speziellen Präferenzen des jeweiligen Betreibers.

Bei der Herstellung des Mischfutters liegen zunächst die verschiedenen Futtermittel und Zusatzstoffe als Einzelkomponenten vor, die je nach Beschaffenheit z. B durch Vermahlen, Verschroten, Trocknen oder Reinigen vorbereitet werden. Haben die einzelnen Komponenten die notwendige Beschaffenheit, wird der eigentliche Mischvorgang in einer dafür geeigneten Mischanlage vorgenommen. Die einzelnen Mischpartien sind dabei je nach Größe der Anlage verschieden. Die essentielle Aminosäure Methionin wird bei der Supplementierung von Mischfuttern in Konzentrationen in der Größenordnung von 0,01 bis 1,0 Gew.-% eingesetzt. Diese Mengen werden durch entsprechende Wäge- und Dosiersysteme direkt dem Mischfutter zugesetzt.

In der DE 31 05 009 wird beschrieben, daß wäßrige Lösungen von Natrium- oder Kaliummethioninat bei ihrer Verwendung als Futtermittelzusatz die gleiche Methioninwirksamkeit aufweisen wie festes Methionin.

Aufgrund der von Lieferanten zu garantierenden Kältestabilität der Methioninatlösungen war es jedoch bisher nur möglich, Lösungen mit einem Gehalt von bis zu 40 Gew.-% Methioninat zu liefern. Entsprechend sind bis zu ca 60 Gew.-% Wasser im Handelsprodukt enthalten, was zu etwa 2,5-fachen Transportkosten führt, verglichen mit dem Transport von festem Methionin. Dies stand der Durchsetzung von flüssigen Supplementen auf Methioninbasis am Markt bisher hindernd entgegen.

Kristallines Na-Methioninat einzusetzen, kam aufgrund des stark hygroskopischen Verhaltes dieser Verbindung nicht infrage.

Es ist aber sehr wünschenswert, ein Additiv für Tierfuttermittel zur Verfügung zu haben, das folgende Erfordernisse erfüllt:
1. Es weist ohne Abstriche die nutritive Wirksamkeit von festem, kristallinem Methionin auf.
2. Es ist in der gewünschten Konzentration vom Futtermittelabmischer selbst in eine flüssige Form zu überführen, ohne daß dieser z. B. mit Alkalien hantieren muß.
3. Während des Transports wird möglichst wenig "Totvolumen" in Form von Wasser befördert, so daß der Wirkstoffgehalt der transportierten Substanzen hoch ist.
4. Das Produkt kann den speziellen Erfordernissen der einzelnen Anwender angepaßt ggf. auch als Feststoff eingesetzt werden

Angesichts dieser Problemstellung ist es Aufgabe der Erfindung, ein Verfahren derart zur Verfügung zu stellen,daß mit dem gewonnenen Produkt die aufgezeigten Probleme gelöst werden können. Aufgabe der Erfindung ist auch die Bereitstellung eines neuen und verbesserten festen Methioninatprodukts für die Tierfuttermittelsupplementierung.

Gegenstand der Erfindung ist ein Verfahren zur Herstellung eines rieselfähigen, gut handhabbaren Tierfuttermittelsupplements auf Methioninsalzbasis, bei dem man im allgemeinen von einer auf herkömmliche Weise erhältlichen wäßrigen Methioninsalzlösung (Methioninatlösung) ausgeht, das dadurch gekennzeichnet ist,daß man die Methioninsalzlösung in einem oder mehreren Schritten in ein Granulat überführt.

Dieses Verfahren kann kontinuierlich oder batchweise durchgeführt werden.

Die Lösungen sind im allgemeinen 10 bis 70 Gew.-%ig, insbesondere 20 bis 60 Gew.-%ig, bevorzugt 25 bis 45 Gew.-%ig, bezogen auf Methionin.

Insbesondere setzt man Natrium- und/oder Kaliummethioninatlösungen ein, wobei das Molverhältnis von Methionin zu K-oder Na-Ionen bevorzugt bei 1,1 : 1 bis 1 1,1 liegt, bevorzugt bei 1:1.

Es hat sich ebenfalls als vorteilhaft herausgestellt, die zu versprühenden und/oder zu granulierenden Lösungen zuvor mit Aktivkohle zu behandeln.

In einer Ausführungsform wird die Methioninsalzlösung in einer Sprühapparatur mit Zentrifugalzerstäuber sprühgetrocknet, wobei die Temperaturdifferenzen zwischen Einlasstemperatur (120 - 200°C) und Auslasstemperatur (60 - 100°C) möglichst groß sein sollten. Das so erhaltene Pulver wird anschließend in ein Granulat übergeführt.Dies erfolgt mit Hilfe eines Granuliertellers, einer Granuliertrommel oder eines Mischers. Bevorzugt stellt man das Granulat in einem Eirich-Mischer mit einem eingesetzten stark scherenden Mischwerkzeug (Messerkopfeinsatz) her.

Man geht dabei im allgemeinen so vor, daß man das sprühgetrocknete Pulver zusammen mit einer bevorzugt gesättigten Lösung des Methioninsalzes in dem Mischwerkzeug granuliert.
Das Gew.-%-Verhältnis von Pulver zu gesättigter Lösung liegt, bezogen auf die Festsubstanz, bevorzugt im Bereich von 1 : 0,01 bis 1 : 0,5.

Das mit Hilfe der Sprühtrocknung gewonnene Pulver hat im allgemeinen bei einer Schüttdichte von 350 bis 500 kg/m³ einen Staubanteil von mindestens 1 bis 5 %(Staubtest nach Dr. Groschopp).
Das Granulat besitzt eine Schüttdichte von >650 kg/m³, bevorzugt >700 kg/m³ bei einer Korngrößenverteilung von 63 bis 5000 µm, bevorzugt 100 bis 3000 µm, besonders bevorzugt 100 bis 1400 µm, wobei ∼ 90 % in einer Korngröße > 100 µm vorliegen.
Der Anteil mit einer Korngröße < 63 µm liegt im allgemeinen bei maximal 2 %, bevorzugt 1 %, der Staubanteil nach Dr. Groschopp bei < 1 %, bevorzugt < 0,5 %.

Eine weitere Variante zur Herstellung des erfindungsgemäßen Granulats stellt die Aufbaugranulation in der Wirbelschicht dar. Dabei erfolgt in nur einem Verfahrensschritt das Versprühen der Natriummethioninatlösung und gleichzeitig der Aufbau des Futtermitteladditiv-Granulats. Dabei kann der entsprechende Wirbelschichtreaktor zur Regulation der Korngröße ein oder mehrere brechende Werkzeuge enthalten.

Auch hier werden bevorzugt gesättigte Methioninatlösungen eingesetzt, obwohl auch geringer konzentrierte Lösungen verwendet werden können.

Der Massenzuwachs in der Wirbelschicht wird im stationären Betrieb durch einen kontinuierlichen Granulatabzug kompensiert. Durch gezielte Fahrweise kann über das Abzugsrohr Granulat einer gewünschten Korngröße ausgetragen werden, das gegebenenfalls beim Austrag eine Kühlzone durchläuft. Der mit Trocknungsluft aus der Trocknungskammer ausgetragene Feinstaub wird abgeschieden und als Feststoffkeime dem Granulationsprozeß wieder zugeführt. Im Fall der Herstellung der erfindungsgemäßen Aufbaugranulate beträgt die Temperatur im Trocknungsteil der Wirbelschicht im allgemeinen 100 bis 200° C.

Die Temperaturführung sowie gegebenenfalls der Einsatz eines oder mehrerer brechender Werkzeuge in der Wirbelschicht bestimmen die erreichbaren Partikelgrößen. Die bevorzugten Granulate mit einem Kornspektrum zwischen 63 und 5000 µm, bevorzugt zwischen 100 und 3000 µm, besonders bevorzugt zwischen 100 und 1400 µm, wobei ∼ 90 % mit einer Korngröße > 100 µm vorliegen, entstehen erfindungsgemäß gegebenenfalls unter Zusatz von Zuschlagstoffen. Der Trockner ist bezüglich der Luftmengen (-geschwindigkeiten) so auszulegen, daß einerseits keine Granulatzerstörung erfolgt, andererseits Feinstaub ab einer gewünschten unteren Korngröße ausgetragen wird.

Das so hergestellte Granulat zeigt bevorzugt eine kugelförmige Gestalt und ein Schüttgewicht von >650 kg/m³, bevorzugt >700 kg/m³ und einen Staubanteil von < 1%, bevorzugt < 0,5% (Staubtest Dr. Groschopp).

Weitere formgebende Verfahren, wie z. B. Extrusion (Bextruder) sind zur Herstellung des erfindungsgemäßen Granulats ebenfalls möglich. Dabei kann das Equipment in einen weiteren vorgeschalteten Prozeß eingebunden werden. So ist beispielsweise die Kombination eines Intensivmischers mit einem Bextruder und einem Wirbelschichttrockner sowohl für kontinuierliche als auch für Batchprozesse möglich.

Zur Verbesserung der Handhabbarkeit der herzustellenden Granulate ist es empfehlenswert, die Methioninsalzlösungen in Gegenwart von Zuschlagstoffen auf silikatischer Basis zu versprühen und zu granulieren.

Zu diesen gehören hydrophile und hydrophobe Kieselsäuren, pyrogener Natur oder durch Fällung hergestellte von 5 bis 300 m²/g, vorzugsweise sprühgetrocknete Kieselsäuren.

Verwendbar sind auch feinteilige Zeolithe z. B. des Typs A oder Bentonite.

Diese Zuschlagstoffe kann man entweder in der zu versprühenden Lösung suspendieren oder bevorzugt mit dem Luftstrom in die Apparatur eindosieren, in der die Lösung versprüht und gegebenenfalls granuliert wird.

Die Menge weiterer Zuschlagstoffe beläuft sich auf 0,1 bis 10 Gew.-%, bevorzugt 0,1 bis 5 Gew.-%, bezogen auf den granulierten Feststoff. Zu diesen Zuschlagstoffen gehören neben den silikatischen Verbindungen naturgemäß bevorzugt Substanzen, die im Futtermittelbereich zugelassen sind, insbesondere Fettsäuren und deren Salze, bevorzugt Alkali- oder Erdalkalisalze.
Zu den Fettsäuren gehören insbesondere Stearinsäure und Palmitinsäure bzw.Mischungen von C₁₆ bis C₁₈-Kohlenstoffatomen enthaltenden Fettsäuren oder deren obengenannten Salzen.

Während das nicht granulierte Natriummethioninat aufgrund seines hygroskopischen Verhaltens leicht verklumpt und seine Rieselfähigkeit verliert, findet man dies bei den erfindungsgemäßen Granulaten unerwarteterweise nicht. Sie bleiben auch bei Bewitterung rieselfähig und leicht handhabbar und zeigen im Vergleich zum sprühgetrockneten Pulver deutliche Verbesserungen Ihrer Eigenschaften im Hinblick auf
a) Rieselfähigkeit und leichte Handhabbarkeit
b) reduzierten Staubgehalt,
c) verringerte Verklumpungstendenz nach Bewitterung
d) höheres Schüttgewicht.
Während das sprühgetrocknete Produkt nach einer Lagerung von 7 Tagen bei 55 % relativer Luftfeuchte verklumpt, bleibt das erfindungsgemäße Granulat rieselfähig und leicht dosierbar.

Das erfindungsgemäße Verfahren läßt sich nur aufgrund des unerwarteten Umstands verwirklichen, daß sich das

Methioninat auch bei Einlasstemperaturen oberhalb von 100 ° C in den Sprühtrockner oder äquivalente Apparaturen nicht zersetzt.
Man hat eigentlich aufgrund der bekannten alkalischen Instabilität dieser Verbindungen eine Zersetzung erwartet, die sich z. B. in Form einer Gelbfärbung bemerkbar macht.

Diese erstmals hergestellten Granulate sind ebenfalls Gegenstand der Erfindung.
Zweckmäßige Ausgestaltungen des Verfahrens zur Herstellung und des Produkts selbst sind Gegenstand abhängiger Patentansprüche.

### Experimenteller Teil

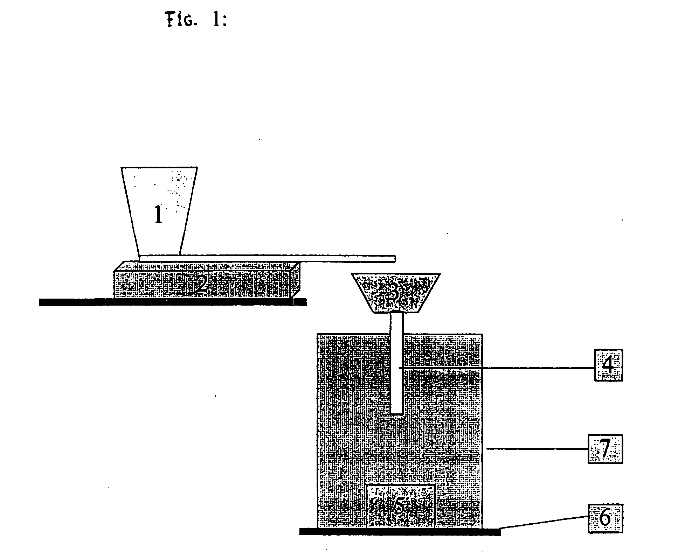

Zur Beurteilung der erfindungsgemäßen Granulate wurden folgende Tests durchgeführt:
1.Hygroskopizitätstest
   Zur Beurteilung der Hygroskopizität bei Raumtemperatur wurden in mehreren Exsikkatoren (⌀ 160 mm) nachfolgend aufgeführte Luftfeuchten mittels gesättigter Lösungen (mit Bodenkörper) eingestellt:
      55% rel. Feuchte: Ca(NO₃)₂ 4 H₂O
      76% rel. Feuchte: NaCl
   Jeweils 5 g Testsubstanz werden in einem Wägegläschen (⌀ 50 mm) gleichmäßig verteilt und die Wägegläschen offen im Exsikkator ( bei gewünschter Luftfeuchte) bei Raumtemperatur gelagert. Nach 1, 2, 3, 5 und 7 Tagen werden die Wägegläschen dem Exsikkator entnommen, optisch begutachtet und die Gewichtszunahme registriert. In einigen Fällen kann ggf. zusätzlich der Wassergehalt mittels Karl-Fischer-Titration bestimmt werden.
2.Verklumpungstest
   In je einem Exsikkator werden bei Raumtemperatur und einer rel. Luftfeuchte von 55 bzw 76% (eingestellt durch gesätt. Salzlösungen, siehe Punkt 1) Siebdruckstempel gelagert., die mit jeweils 20 g Testsubstanz gefüllt und einem Auflagegewicht von 1,2 kg versehen sind. Nach 3 Tagen werden die so erhaltenen Preßlinge vorsichtig in ein horizontal rotierendes Walzensieb gelegt (55 U/min). Nach dem Einschalten des rotierenden Siebes wird die Abriebszeit in s bestimmt, nach der eine definierte Menge (10 g) an Abrieb aus dem Walzensieb ausgetreten ist (Waage unterhalb des Walzensiebs). Je kürzer die Abriebszeiten, desto weniger ausgeprägt ist die Verklumpungsneigung.
3.Staubmessung nach Dr. Groschopp
   100 g Testsubstanz werden über den Aufgabetrichter (1) in die Schütteirinne (2) gegeben. Die Frequenz der Schüttelrinne wird über den Regler so eingestellt, daß das Pulver langsam und gleichmäßig in den Trichter rieselt. Das Pulver fällt durch den Trichter (3) und das Einfüllrohr (4) in den darunter stehenden Innenzylinder (5) der Testapparatur, während sich der Staub außerhalb dieses Gefäßes auf der Bodenplatte (6) des Außenzylinders (7) ansammelt (vgl. Abb. 1).
      Nach Beendigung des Pulverdurchlaufs werden die in der Schüttelrinne und im Trichter verbliebenen Pulverreste mittels eines Pinsels in die Testapparatur übergeführt. Nach einer Wartezeit von 5 min. wird der auf der blankpolierten Bodenplatte abgesetzte Staub gesammelt und ausgewogen. Der Staubgehalt wird in Prozent bezogen auf die Einwaage angegeben.

### Beispiel

Es wurde ein sprühgetrocknetes Natriummethioninat (NaMet; Molverhältnis Met: Na = 1:1) für die Granulation verwendet, wobei die Methioninatlösung mit Aktivkohle vorbehandelt war.

### Analysendaten von NaMet (sprühgetrocknet)

- Schüttdichte (kg/m³] 500
- Stampfdichte (kg/m³] 600
- Korngrößenverteilung [%]
   < 200 µm > 90 %
- Staubanteil [%] ≅ 4
   (Staubtest nach Dr. Groschopp Abb. 1: Staubtestgerät

Das sprühgetrocknete Produkt wurde unter nachfolgend aufgeführten Bedingungen im Eirich-Mischer granuliert (Tab.1):

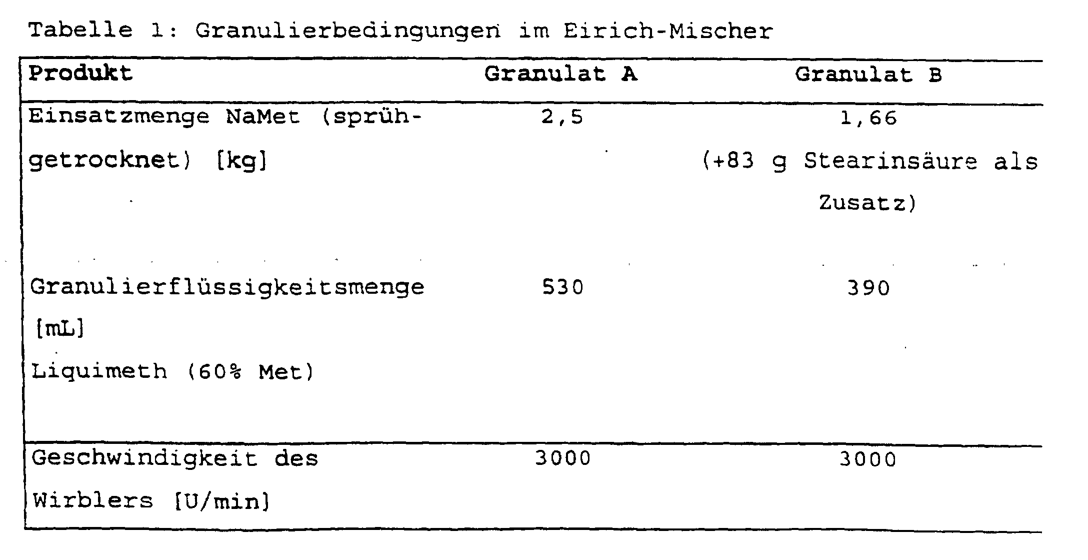

Das Granulat wurde hinsichtlich seiner allgemeinen Handhabungseigenschaften (Tab.2) überprüft.

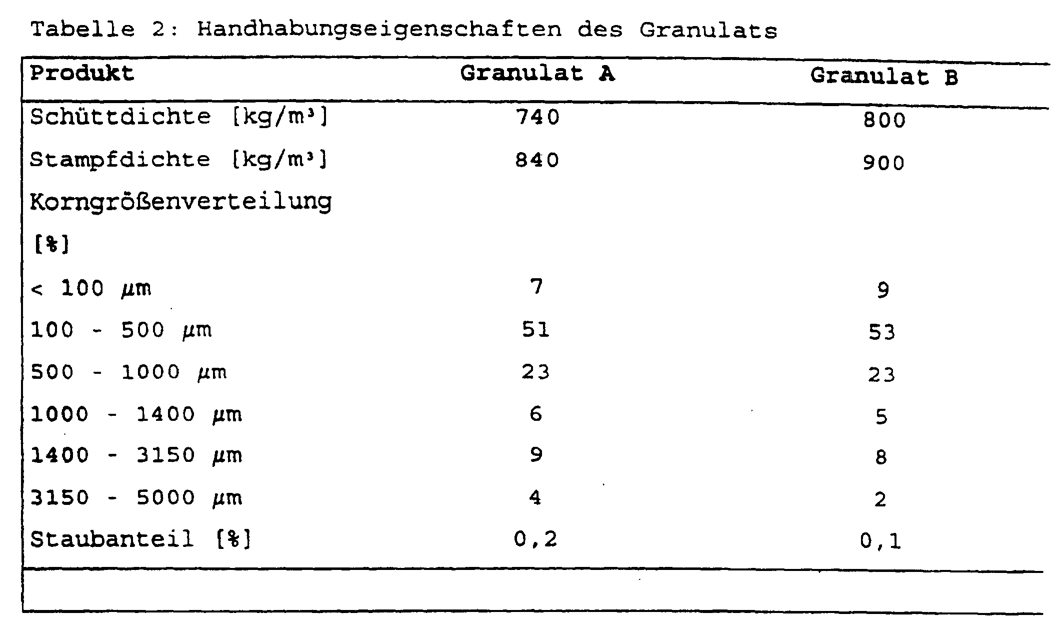

Besonders aussagekräftig sind jedoch Daten zum hygroskopischen Verhalten und zur Verklumpungsneigung von Natriummethioninat in sprühgetrockneter bzw. Granulatform (vgl. Tab. 3).

Bei einem Vergleich der verschiedenen Produktformen zeigt sich, daß beim Granulat eine deutlich niedrigere Gewichtszunahme (= Wasseraufnahme) erfolgt. Besonders. ausgeprägt sind die Unterschiede zwischen sprühgetrocknetem Produkt und Granulat bei einer rel. Luftfeuchte von 55%. Bei einer rel. Feuchte von 76% sind die zahlenmäßigen Differenzen zwar kleiner, der optische Eindruck zeigt deutliche Vorteile für die Granulatform.

Gewichtszunahmen bis ca. 18% zeigen eine mehr oder weniger starke Oberflächenverkrustung des Produkts. Während beim Granulat ein kurzes Anstoßen des Glasgefäßes genügte, um wieder ein freifließendes Produkt zu erhalten, war beim sprühgetrockneten Pulver ein Zerdrücken nach der 'Bewitterung' notwendig, um zu einem rieselfähigen Material zu kommen.

Diesen Eindruck bestätigen auch die Ergebnisse zur Beurteilung der Verklumpungsneigung (Tab. 3). Die geringere Verklumpungsneigung von Natriummethioninat in Granulatform zeigt sich deutlich in den niedrigeren Abriebszeiten.

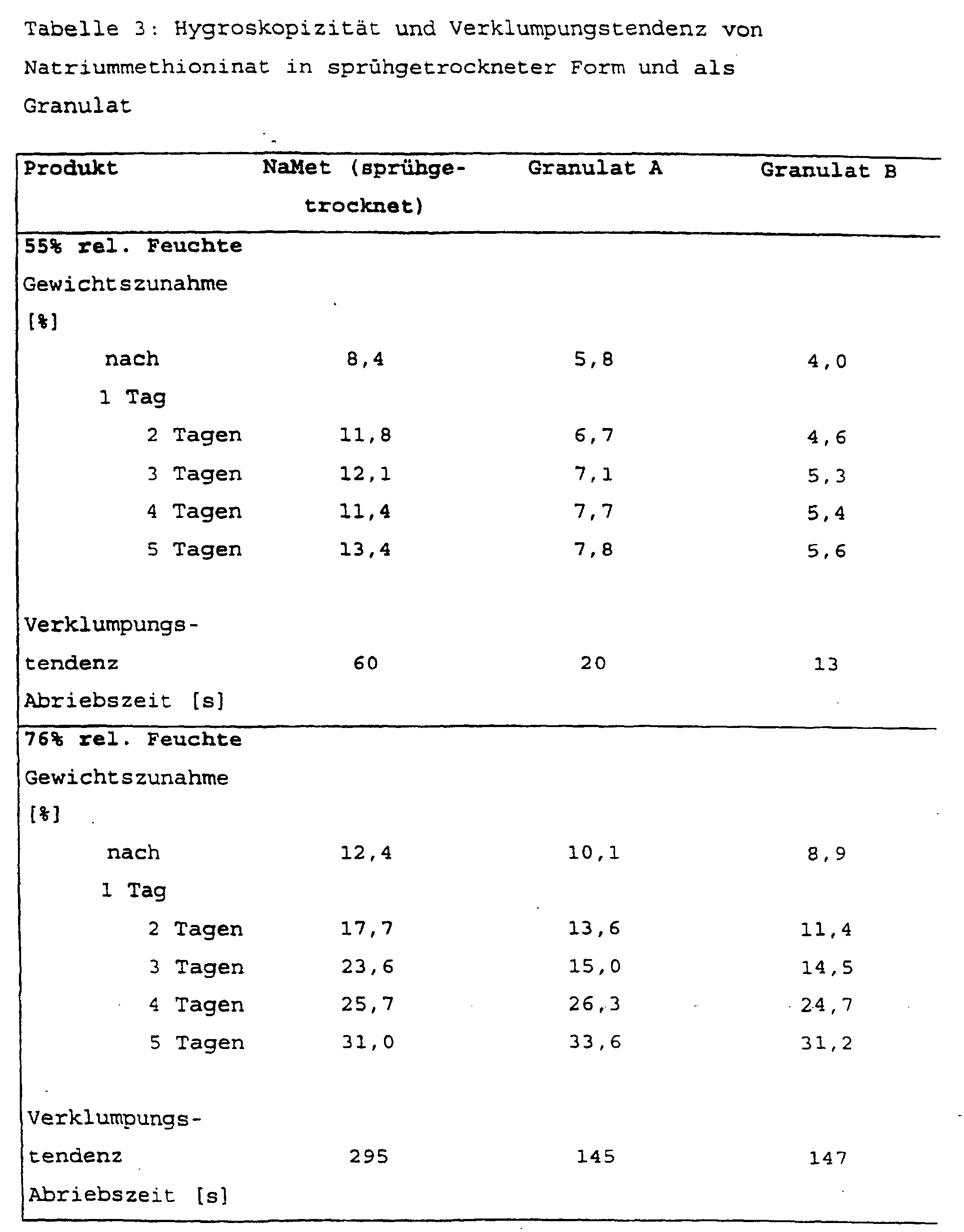

## Patentansprüche

1. Verfahren zur Herstellung eines rieselfähigen Tierfuttermittelsupplements auf Methioninsalzbasis,
**dadurch gekennzeichnet,**
**daß** man eine Methioninsalzlösung in ein Granulat überführt.

2. Verfahren gemäß Anspruch 1,
**dadurch gekennzeichnet,**
**daß** man die Methioninsalzlösung sprühtrocknet und das so erhaltene Pulver anschließend granuliert.

3. Verfahren gemäß Anspruch 1,
**dadurch gekennzeichnet, daß** man die Methioninsalzlösung in einer Wirbelschicht gleichzeitig sprühtrocknet und granuliert.

4. Verfahren gemäß einem oder mehreren der Ansprüche 1 bis 3,
**dadurch gekennzeichnet,**
**daß** man die Methioninsalzlösung durch ein formgebendes Verfahren gegebenenfalls durch eine Extrusion) in ein Granulat überführt.

5. Verfahren gemäß einem oder mehreren der Ansprüche 1 bis 4,
**dadurch gekennzeichnet,**
**daß** man die Methioninsalzlösung vor der Sprühtrocknung und/oder Granulierung mit Aktivkohle behandelt.

6. Verfahren nach einem oder mehreren der Ansprüche 1 bis 5,
**dadurch gekennzeichnet,**
**daß** man die Methioninsalzlösung in Gegenwart von Zuschlagstoffen auf silikatischer Basis versprüht und/oder granuliert.

7. Verfahren gemäß Anspruch 6,
**dadurch gekennzeichnet,**
**daß** man als Zuschlagsstoff eine hydrophile oder hydrophobe Kieselsäure, durch Fällung hergestellt oder pyrogener Natur, in einer Menge von 0,1 bis 10 Gew.-%, bezogen auf den Feststoff, verwendet.

8. Verfahren gemäß Anspruch 6,
**dadurch gekennzeichnet,**
**daß** man als Zuschlagsstoff einen feinteiligen Zeolith oder Bentonit in einer Menge von 0,1 bis 10 Gew.-%, bezogen auf den Feststoff, verwendet.

9. Verfahren gemäß Anspruch 6,
**dadurch gekennzeichnet,**
**daß** man als Zuschlagstoff Fettsäuren und/ oder deren Alkali-/ Erdalkalisalze in einer Menge von 0,1 bis 10 Gew.-%, bezogen auf den Feststoff, verwendet.

10. Verfahren nach einem oder mehreren der vorhergehenden Ansprüche,
**dadurch gekennzeichnet,**
**daß** man eine 10 - 70 %ige Lösung, bezogen auf eine Methioninbasis, einsetzt.

11. Verfahren nach Anspruch 10,
**dadurch gekennzeichnet,**
**daß** man eine 25 - 50 %ige Lösung einsetzt.

12. Verfahren nach einem der vorhergehenden Ansprüche,
**dadurch gekennzeichnet,**
**daß** man eine Na- und/oder K-Methioninatlösung einsetzt.

13. Verfahren nach Anspruch 12,
**dadurch gekennzeichnet, daß** man eine Natriummethioninatlösung einsetzt.

14. Verfahren nach einem oder mehreren der vorhergehenden Ansprüche,
**dadurch gekennzeichnet,**
**daß** man nach der Sprühtrocknung ein Pulver mit einer Schüttdichte im Bereich von 350 -500 kg/m³ und einem Staubanteil im Bereich von 1 bis 5 % erhält und dieses granuliert.

15. Verfahren nach einem oder mehreren der vorhergehenden Ansprüche,
**dadurch gekennzeichnet,**
**daß** man das sprühgetrocknete Pulver zusammen mit einer gesättigten Lösung des Methioninsalzes in einem stark scherenden Mischwerkzeug granuliert.

16. Verfahren nach Anspruch 15,
**dadurch gekennzeichnet,**
**daß** das Gew.-Verhältnis von Pulver zu gesättigter Lösung des Methioninats bezogen auf die Festsubstanz, im Bereich von 1 : 0,01 bis 1 : 0,5 liegt.

17. Verfahren nach einem oder mehreren der vorhergehenden Ansprüche,
**dadurch gekennzeichnet,**
**daß** man die Aufbaugranulation in einer Wirbelschicht durchführt, ggf. mit eingesetzten Brechwerkzeugen.

18. Verfahren nach einem oder mehreren der Ansprüche
**dadurch gekennzeichnet,**
**daß** man zur Herstellung des Granulats ein Extrusionsformgebungsverfahren benutzt, ggf. in Kombination mit einem Intensivmischer bzw. einem Wirbelschichttrockner.

19. Methioninatgranulat mit hoher Rieselfähigkeit **gekennzeichnet durch**
a) eine Schüttdichte von > 650 kg/m³,
b) eine Korngrößenverteilung von 63 bis 5000 µm
c) einen Staubgehalt von < 1%.

## Claims

1. Process for preparing a free-flowing, animal feed supplement based on a methionine salt, **characterised in that** a methionine salt solution is converted into a granular material.

2. Process according to Claim 1, **characterised in that** the methionine salt solution is spray dried and the powder obtained in this way is then granulated.

3. Process according to Claim 1, **characterised in that** the methionine salt solution is simultaneously spray dried and granulated in a fluidised bed.

4. Process according to one or more of Claims 1 to 3, **characterised in that** the methionine salt solution is converted into a granular material by means of a shaping process (optionally by extrusion).

5. Process according to one or more of Claims 1 to 4, **characterised in that** the methionine salt solution is treated with active carbon before spray drying and/or granulation.

6. Process according to one or more of Claims 1 to 5, **characterised in that** the methionine salt solution is sprayed and/or granulated in the presence of additives based on siliceous material.

7. Process according to Claim 6, **characterised in that** a hydrophilic or hydrophobic silica, prepared by precipitation or of a pyrogenic nature, is used as the additive in an amount of 0.1 to 10 wt.%, with respect to the solid.

8. Process according to Claim 6, **characterised in that** a finely divided zeolite or bentonite is used as the additive in an amount of 0.1 to 10 wt.%, with respect to the solid.

9. Process according to Claim 6, **characterised in that** fatty acids and/or their alkali metal/alkaline earth metal salts are used as the additive in an amount of 0.1 to 10 wt.%, with respect to the solid.

10. Process according to one or more of the preceding Claims, **characterised in that** a 10 to 70 % strength solution, with respect to a methionine base, is used.

11. Process according to Claim 10, **characterised in that** a 25 to 50 % strength solution is used.

12. Process according to one of the preceding Claims, **characterised in that** a Na and/or K methioninate solution is used.

13. Process according Claim 12, **characterised in that** a sodium methioninate solution is used.

14. Process according to one or more of the preceding Claims, **characterised in that** a powder with a bulk density in the range 350 to 500 kg/m³ and a dust fraction in the range 1 to 5 % is obtained after spray drying and that this is granulated.

15. Process according to one or more of the preceding Claims, **characterised in that** the spray dried powder is granulated together with a saturated solution of the methionine salt in a mixer with a strong shear action.

16. Process according to Claim 15, **characterised in that** the ratio by weight of powder to saturated solution of methioninate, with respect to the solid substance, is in the range from 1:0.01 to 1:0.5.

17. Process according to one or more of the preceding Claims, **characterised in that** granulation is performed in a fluidised bed, optionally with inserted crushing devices.

18. Process according to one or more of the Claims, **characterised in that** an extrusion shaping process is used to obtain the granulated material, optionally combined with an intensive mixer or a fluidised bed drier.

19. Methioninate granular material which is very free-flowing **characterised by**
a) a bulk density of > 650 kg/m³,
b) a particle size distribution of 63 to 5000 µm,
c) a dust content of < 1 %.

## Revendications

1. Procédé pour la préparation d'un additif fourrager pouvant s'écouler à base d'un sel de méthionine, **caractérisé en ce qu'**on transforme une solution de sel de méthionine en un granulat.

2. Procédé selon la revendication 1, **caractérisé en ce qu'**on sèche la solution de sel de méthionine par pulvérisation et **en ce qu'**on granule ensuite la poudre ainsi obtenue.

3. Procédé selon la revendication 1, **caractérisé en ce qu'**on sèche la solution de sel de méthionine par pulvérisation et qu'on granule simultanément dans un lit fluidisé.

4. Procédé selon l'une ou plusieurs des revendications 1 à 3, **caractérisé en ce qu'**on transforme la solution de sel de méthionine par un procédé de moulage, le cas échéant par une extrusion, en un granulat.

5. Procédé selon l'une ou plusieurs des revendications 1 à 4, **caractérisé en ce qu'**on traite la solution de sel de méthionine, avant le séchage par pulvérisation et/ou la granulation, avec du charbon actif.

6. Procédé selon l'une ou plusieurs des revendications 1 à 5, **caractérisé en ce qu'**on pulvérise et/ou qu'on granule la solution de sel de méthionine en présence d'additifs à base de silicates.

7. Procédé selon la revendication 6, **caractérisé en ce qu'**on utilise comme additif une silice hydrophile ou hydrophobe préparée par précipitation ou de nature pyrogène, en une quantité de 0,1 à 10% en poids par rapport au solide.

8. Procédé selon la revendication 6, **caractérisé en ce qu'**on utilise comme additif une zéolithe finement divisée ou de la bentonite finement divisée en une quantité de 0,1 à 10 % en poids par rapport au solide.

9. Procédé selon la revendication 6, **caractérisé en ce qu'**on utilise comme additif des acides gras et/ou leurs sels alcalins ou alcalino-terreux en une quantité de 0,1 à 10 % en poids par rapport au solide.

10. Procédé selon l'une ou plusieurs des revendications précédentes, **caractérisé en ce qu'**on utilise une solution à 10 jusqu'à 70 % par rapport à une base de méthionine.

11. Procédé selon la revendication 10, **caractérisé en ce qu'**on utilise une solution de 25 à 50 %.

12. Procédé selon l'une quelconque des revendications précédentes, **caractérisé en ce qu'**on utilise une solution de méthionate de sodium et/ou de potassium.

13. Procédé selon la revendication 12, **caractérisé en ce qu'**on utilise une solution de méthionate de sodium.

14. Procédé selon l'une ou plusieurs des revendications précédentes, **caractérisé en ce qu'**on obtient après le séchage par pulvérisation une poudre présentant une densité apparente dans la plage de 350 à 500 kg/m³ et une proportion de poussières dans la plage de 1 à 5 % et **en ce qu'**on granule celle-ci.

15. Procédé selon l'une ou plusieurs des revendications précédentes, caractérisé ce qu'on granule la poudre séchée par pulvérisation avec une solution saturée du sel de méthionine dans un outil de mélange à effet de cisaillement important.

16. Procédé selon la revendication 15, **caractérisé en ce que** la proportion en poids de poudre à la solution saturée du méthionate, par rapport à la substance solide, se situe dans la plage de 1:0,01 à 1:0,5.

17. Procédé selon l'une ou plusieurs des revendications précédentes, **caractérisé en ce que** la granulation de constitution est réalisée dans un lit fluidisé, le cas échéant avec des outils de broyage.

18. Procédé selon l'une ou plusieurs des revendications précédentes, **caractérisé en ce qu'**on utilise pour la préparation du granulat un procédé de moulage par extrusion, le cas échéant en combinaison avec un mélangeur intensif ou un sécheur à lit fluidisé.

19. Granulat de méthionate présentant une aptitude élevée à l'écoulement, **caractérisé par**
a) une densité apparente de > 650 kg/m³
b) une répartition granulométrique de 63 à 5000 µm
c) une teneur en poussières < 1 %.
